# EUROPEAN PATENT SPECIFICATION

(11) **EP 2 369 174 B1**
(45) Date of publication and mention of the grant of the patent: **28.11.2012**
(21) Application number: 10155963.1
(22) Date of filing: 09.03.2010
(51) Int. Cl.: F03D 1/00, F03D 11/04

(54) **A method of craneless mounting or demounting of a wind turbine blade**
Verfahren zum kranlosen Aufbau oder Abbau einer Windturbinenschaufel
Procédé pour le montage ou le démontage sans grue d'une pale d'éolienne

(43) Date of publication of application: 28.09.2011
(73) Proprietor: LM GLASFIBER A/S, 6000 Kolding (DK)
(72) Inventor: Okutan, Ufuk, 7000 Fredericia (DK)
(74) Representative: Kitchen, Steven Richard

(56) References cited:
- WO-A2-2010/034288
- JP-A- 2005 002 875
- US-A1- 2007 290 426

## Description

The present invention relates to a method of craneless mounting or demounting of a wind turbine blade of a wind turbine. The invention further relates to an apparatus for mounting or demounting a wind turbine blade of a wind turbine as well as a wind turbine installation comprising such an apparatus.

During operation of a wind turbine damage may occur to the blades of the wind turbine, e.g. from lightning strikes, hail, hundred years storms or the like. In such a situation, the damaged wind turbine blade is replaced in order to make the downtime of the wind turbine as short as possible.

It is well-known to use cranes for mounting or demounting wind turbine blades of a wind turbine. The damaged wind turbine blade is arranged in a horizontal position or a vertical position after which a root flange of the wind turbine blade is separated from a flange of a rotor hub of the wind turbine. The damaged wind turbine blade can then be lowered to the ground or on to a trailer, or for an off-shore wind turbine on to a pram or another vessel. Afterwards a new wind turbine blade may be mounted to the rotor hub by raising it in a vertical or horizontal position and subsequently connecting the root flange of the new wind turbine blade to the flange of the rotor hub. However, the use of cranes - portable or stationary - entails a high expense for rent and operation of the crane.

WO 2004/067954 provides a solution for craneless mounting and demounting of wind turbine blades of a wind turbine. In this solution, the wind turbine blade is arranged in a vertical position and guide cables are tensioned vertically along the tower of the wind turbine between the hub of the wind turbine and the wind turbine blade. However, the document provides no solution as to how to move the wind turbine blade from a vertical position to a horizontal position.

Normally, a small auxiliary crane or a carriage may be used for lowering the wind turbine blade on to a horizontal position on the ground.

WO 2006/053554 provides a solution to the above problem by providing a guiding cable tensioned in an oblique angle of approximately 45 degrees from the hub of the wind turbine blade to an anchoring point on the ground.

However, it is not always possible to anchor such a guiding cable to the ground, in particular for off-shore wind turbines.

It is an object of the invention to obtain a new method, a new apparatus, and a new wind turbine installation, and which overcomes or ameliorates at least one of the disadvantages of the prior art or which provides a useful alternative.

According to a first aspect of the invention, this is obtained by a method of craneless mounting or demounting of a wind turbine blade of a wind turbine, the wind turbine including a tower on top of which a machine housing is arranged, the machine housing comprising a hub from which a number of wind turbine blades extend substantially radially, and wherein the wind turbine blade comprises a root end and a tip end, wherein the method comprises the steps of: a) attaching a first cable via a first attachment means to the wind turbine blade at a first longitudinal position of the blade, b) attaching the first cable to a first upper loading means arranged at the machine housing, c) arranging an intermediate cable guiding means between the first attachment means and the first upper loading means at a first distance from the first attachment means, d) attaching a second cable via a second attachment means to the wind turbine blade at a second longitudinal position of the blade, and e) attaching the second cable to the intermediate cable guiding means at a second distance from the second attachment means, and wherein the method further comprises the step of moving the blade between a horizontal position and a vertical position by: f) varying a length of the first cable and/or varying a length of the second cable so that the first distance and/or the second distance are varied.

By arranging and utilising the intermediate cable guiding means, which is connected to both the first cable and the second cable, it is possible to exert horizontal force components to the first longitudinal position of the blade and/or the second longitudinal position of the blade by varying the first length and/or the second length, thereby changing the angular orientation of the wind turbine blade. Thereby, a simple solution is provided for changing the orientation of the wind turbine blade between a horizontal position, where the blade during demounting can be lowered on to a trailer, the ground or a pram, and during mounting of the blade can be raised from the trailer, the ground or the pram, and to a vertical position, where the blade can be mounted or demounted from the hub of the wind turbine. The method does not need any additional guiding means provided between the machine housing and the ground.

In practice the first length can be varied by varying the cable length between the first upper loading means and the first attachment means.

According to an advantageous embodiment, the second cable further is attached to a second upper loading means arranged at the machine housing, and wherein the intermediate cable guiding means is arranged between the second attachment means and the second upper loading means at said second distance from the second attachment means. In this embodiment the second length can be varied by varying the cable length between the second upper loading means and the second attachment means.

According to another advantageous embodiment, in the horizontal position of the wind turbine blade, the first attachment means are positioned in a first horizontal position and the second attachment means are positioned in a second horizontal position, and wherein the intermediate cable guiding means is arranged in an intermediate horizontal position between the first horizontal position and the second horizontal position. It is clear that the longitudinal distance between the first longitudinal position and the second longitudinal position of the blade is substantially fixed. By changing the first length or the second length, the triangular shape formed between the first attachment means, the second attachment means and the intermediate cable guiding means is changed. In the horizontal position of the wind turbine blade, an apex point of said triangle thus faces upwards.

According to one embodiment, in both the horizontal position and the vertical position of the wind turbine blade, a part of the first cable between the intermediate cable guiding means and the first upper loading means is oriented substantially vertically. Thereby, the wind turbine can be raised or lowered vertically in both the horizontal position and the vertical position of the blade by shortening or lengthening the first cable, e.g. by rolling up or rolling off the first cable.

In another embodiment, in both the horizontal and vertical position of the wind turbine blade, a part of the second cable between the intermediate cable guiding means and the second upper loading means is oriented substantially vertically. Thereby, the wind turbine can be raised or lowered vertically in both the horizontal position and the vertical position of the blade by synchronously shortening or lengthening the first cable and the second cable.

In an advantageous embodiment, step f) is carried out by keeping either the first distance or the second distance fixed and varying the other of the first distance and the second distance. Thereby, a better control of the aforementioned triangular shape and thus the moving of the wind turbine blade is achieved. The fixed distance can be determined appropriately by considering the length of the wind turbine blade and/or the height of the tower and in order to achieve appropriate forces to the first cable and the second cable.

Advantageously, the first attachment means is attached in vicinity of the root end of the wind turbine blade, and the second attachment means is attached in vicinity of the tip end of the wind turbine blade. Such positions provide the optimum control of the blade movement from the horizontal position to the vertical position of the wind turbine blade.

According to a second aspect, the invention provides an apparatus for mounting or demounting a wind turbine blade of a wind turbine including a tower on top of which a machine housing is arranged, the machine housing comprising a hub from which a number of wind turbine blades extend substantially radially, and wherein the wind turbine blade comprises a root end and a tip end. The apparatus comprises: a first cable provided with first attachment means for attaching to the wind turbine blade at a first longitudinal position, a second cable provided with second attachment means for attaching to the wind turbine blade at a second longitudinal position, first upper loading means arranged at the machine housing and being attached to the first cable, first drive means for varying a length of the first cable, and second drive means for varying a length of the second cable. The apparatus further comprises: an intermediate cable guiding means connected to the first cable between the first upper loading means and the first attachment means at a first distance from the first attachment means, and further being connected to the second cable at a second distance from the second attachment means.

In particular it is noted that the first drive means may be adapted for changing said first distance, whereas the second drive means may be adapted for changing said second distance. In practice the first length can be varied by varying the cable length between the first upper loading means and the first attachment means.

According to an advantageous embodiment, the apparatus further comprises second upper loading means arranged at the machine housing and being attached to the second cable. In this embodiment the second length can be varied by varying the cable length between the second upper loading means and the second attachment means.

Advantageously, the intermediate cable guiding means may be provided with fixation means for rigidly attaching the intermediate cable guiding means to the first cable and or the second cable. Thereby, it is possible to change the orientation of a wind turbine blade attached to the first attachment means in a first longitudinal position and a second attachments means in a second longitudinal position by keeping either the first distance or the second distance fixed and changing the other of the first distance and the second distance. This provides an additional control over the wind turbine blade during the movement between the horizontal position and the vertical position. Preferably, the fixation means may be released from the first cable, thus being adapted for releasable attaching to the second cable. If the intermediate cable guiding means is provided with fixation means for rigidly attaching to both the first and the second attachment means, it is ensured that the wind turbine blade will maintain the particular orientation during lowering or rising of the blade. The intermediate cable guiding means may be hoisted down along the first cable and/or the second cable by use of a guide cable.

In a particular advantageous embodiment, the first drive means and the second drive means comprise a first cable winch and a second cable winch, respectively. Thereby a simple solution for lengthening or shortening the cable length between the particular winch and the particular attachment means is provided.

According to one embodiment, the second cable winch is arranged on or integrated into the intermediate cable guiding means. In this configuration, only a single cable from the machine housing to the wind turbine blade is needed in order to lower or raise said wind turbine blade. Thus, the second winch is used for changing the angular orientation of the blade only. The second cable winch may advantageously be a pass-through winch.

According to another embodiment, the first cable winch and the first upper loading means are an integrated unit, and/or the second cable winch and the second upper loading means are an integrated unit. Thus, such a winch is arranged at the machine housing, e.g. within the hub.

In yet another embodiment, the first upper loading means and/or the second upper loading means are cable guiding means, such as a pulley or a deflection roller. Thereby, the cable winch or winches may be arranged elsewhere, e.g. on the ground. The cables may for instance be connected to the winches via additional pulleys or deflection rollers, which for instance may be attached to a foundation of the wind turbine. Accordingly, the first drive means and/or the second drive means may be arranged at a horizontal level in vicinity of a foundation of the tower, e.g. on a boat or pram, if mounting/demounting a wind turbine blade of an off-shore wind turbine.

According to a third aspect, the invention provides a wind turbine installation including a tower on top of which a machine housing is arranged, the machine housing comprising a hub from which a number of wind turbine blades extend substantially radially, and wherein the wind turbine further comprises a mounting/demounting apparatus according to any of the aforementioned embodiments.

According to an advantageous embodiment, a reinforcement bar or a jig is mounted at the hub to support the first upper loading means and/or the second upper loading means. The jig may for instance be attached to a hub flange of the hub, or between hub flanges of other blades of the wind turbine. The jig or reinforcement bar may alternatively be arranged within the hub or externally to the hub or a spinner of the hub. It is also possible to use a plurality of jigs, e.g. one arranged within the hub, and one externally on the spinner of the hub.

According to another advantageous embodiment, the first upper loading means and/or the second upper loading means are supported by support means attached to wind turbine blades of the wind turbine. This provides a simple solution, where no additional components need to be mounted within the hub or machine housing.

The first attachment means and the second means may be chosen from the group of: jigs, a belt, a pocket, a sling, a basket sling, a ratchet belt a collar or the like as well as combinations thereof. Advantageously the first attachment means may comprise a jig attached to a root flange of the wind turbine blade. If the attachment means are to be attached near the tip end of the wind turbine blade, it may advantageously comprise a basket sling or a collar.

The method according to the invention may in principle also be carried out by use of a portable or stationary crane. The crane must thus be provided with at least a first cable winch and preferably a second cable winch. An intermediate cable guiding means is thus arranged between a first attachment means and the first cable winch. In one embodiment, the second cable winch is arranged on the intermediate cable guiding means. Alternatively, the second cable winch is arranged on the crane, and the intermediate cable guiding means is arranged also between the second attachment means and the second cable winch.

The invention is explained in detail below with reference to an embodiment shown in the drawings, in which
Fig. 1 shows a wind turbine,
Figs. 2-7 show schematic views of a hub flange of a wind turbine,
Figs. 8, 9a, and 10-12 show schematic cross-sections of a hub and a wind turbine blade of a wind turbine,
Fig. 9b shows a schematic view of a root flange of a wind turbine,
Fig. 13 shows a schematic view of a jig,
Figs. 14-17 illustrate schematic views a first embodiment of the invention,
Fig. 18 illustrates a schematic view a second embodiment of the invention,
Fig. 19 illustrates a schematic view a third embodiment of the invention, and
Fig. 20 shows a schematic view of upper loading means used in a fourth embodiment of the invention.

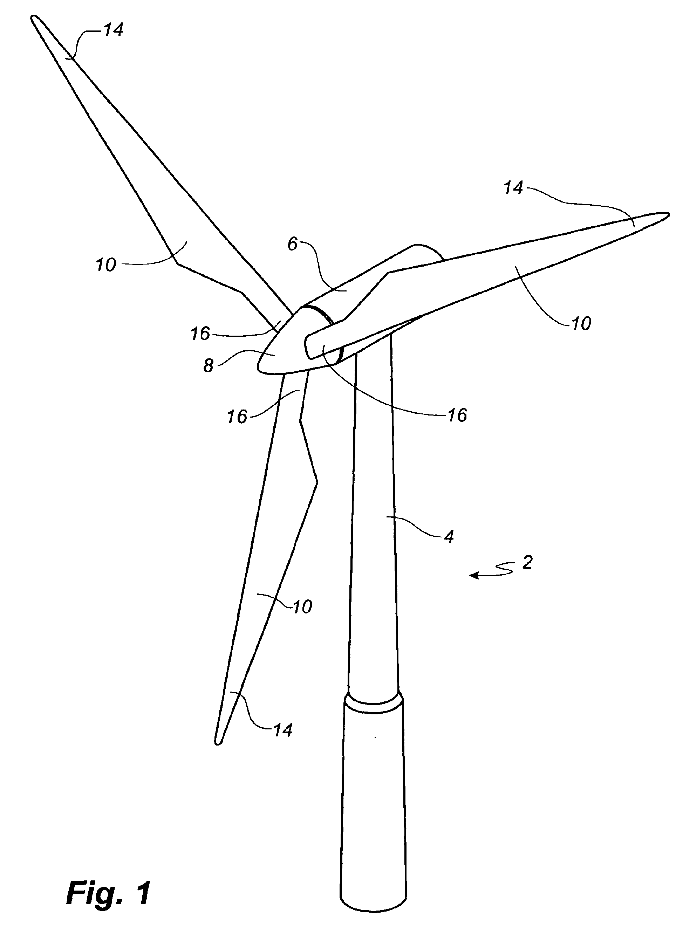

Fig. 1 illustrates a conventional modern horizontal axis wind turbine according to the so-called "Danish concept" with a tower 4, a nacelle 6 and a rotor with a substantially horizontal rotor shaft, preferably in an upwind configuration, i.e. a front runner. The rotor includes a hub 8 and three blades 10 extending radially from the hub 8, each having a blade root 16 nearest the hub and a blade tip 14 furthest from the hub 8.

During operation of the wind turbine damage may occur to the blades of the wind turbine, e.g. from lightning strikes, hail, hundred years storms or the like. In such a situation, the damaged wind turbine blade is replaced in order to make the downtime of the wind turbine as short as possible. The following description is related to the method of demounting the wind turbine blade of the wind turbine. In a mounting method, the steps may be carried out in reverse.

The rotor of the wind turbine is brought to a position, where the damaged wind turbine blade is oriented in a 6 o'clock position. The wind turbine blades are set at a feathering position so that the blades are not moved due to sudden occurring lift.

During normal use of the wind turbine, the wind turbine blades are attached to the hub via root flanges of the wind turbine blades and hub flanges of the rotor hub of the wind turbine.

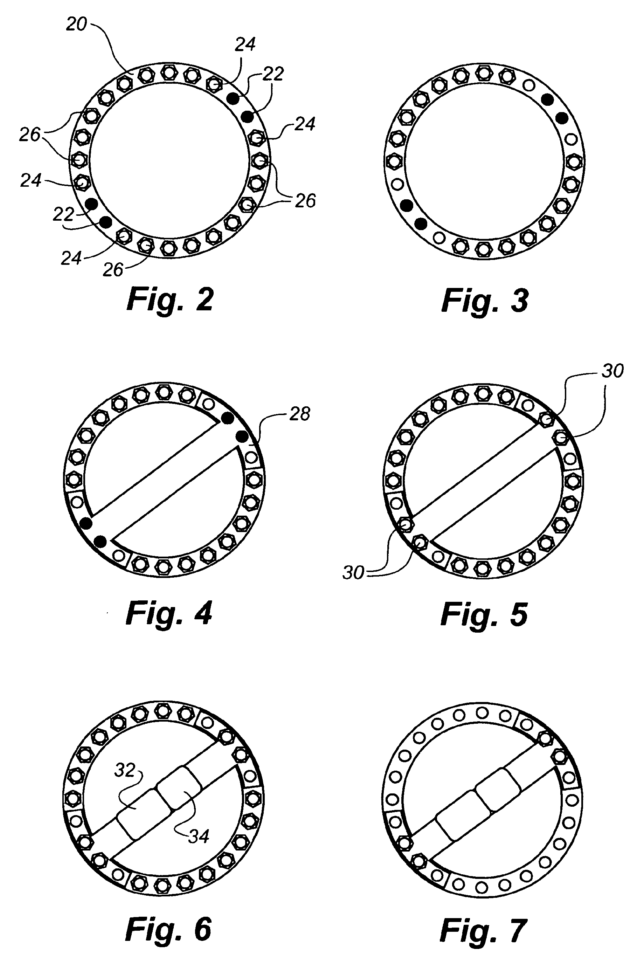

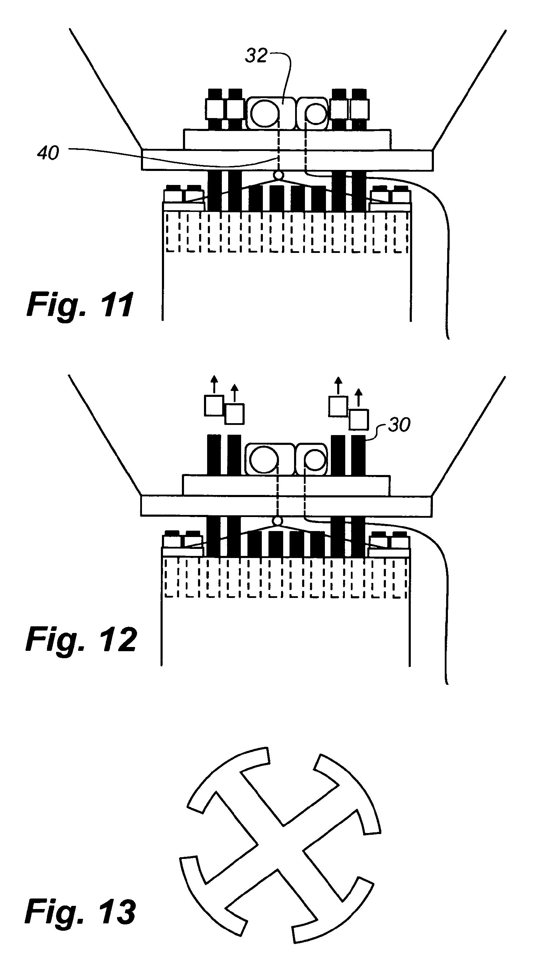

Figs. 2-7 show schematic views of a hub flange 20 or hub adapter of the wind turbine. The damaged wind turbine blade is connected to the hub flange 20 via nuts and stay bolts, 22, 24, 26, which connect the root flange of the wind turbine blade to the hub flange 20. In order to demount the wind turbine blade, initially a number of first nuts and bolts 22 are removed (see Fig. 2), after which the nuts of second nuts and bolts 24 are removed (see Fig. 3). Then a hub adapter jig 28 is attached to the hub flange 20 (see Fig. 4). Afterwards a number of long stay bolts and nuts 30 are attached to the root flange of the wind turbine blade and the hub adapter jig 28 (see Fig. 5), the long stay bolts being longer than the other stay bolts. A first cable winch 32 and a second cable winch are attached to the hub adapter jig 28 (see Fig. 6). Then, the remainder of bolts and nuts 26 are removed (see Fig. 7). The wind turbine blade is now carried only via the long stay bolts and nuts 30. The hub adapter jig 28 may be designed in any suitable shape such as the one shown in Figs. 4-7 or as an x-shaped jig as shown in Fig. 13.

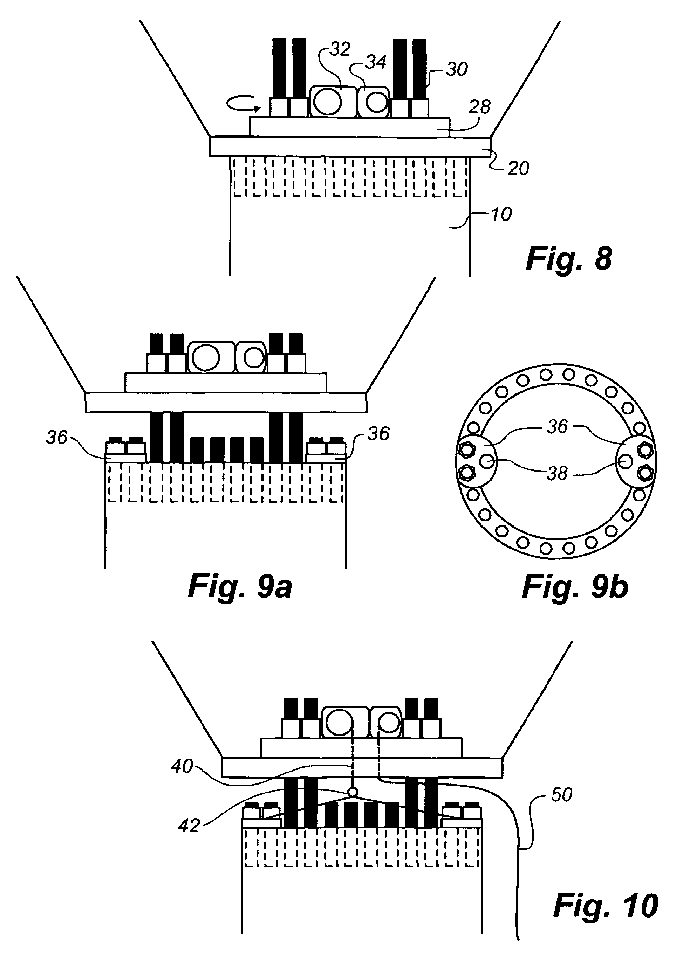

Hydraulic nut wrenches are mounted to the nuts of the long stay bolts and nuts 30, and said nuts are rotated by use of the wrenches (see Fig. 8) thus lowering the blade to lower position (see Fig. 9a). Then a number of attachment plates 36 as shown in Fig. 9b is mounted to the hub flange of the wind turbine blade 10. The attachment plates 36 are provided with holes 38, to which attachment means for instance a support chain 42 may be attached (see Fig. 10). The attachment plates 36 may be designed in any suitable shape, such as similar to the hub adapter jig 28 shown in Fig. 4 or the jig shown in Fig. 13.

Overall, it is seen that a first attachment means for attaching a first cable comprises the attachment plates 36 and the support chain 42. A first cable 40 is attached to the support chain 42 and to the first cable winch 32. A second cable 50 is connected to the second cable winch 34 and is lowered through the central opening of the hub flange 20 (see Fig. 10).

At this point, the wind turbine blade 10 is raised by use of the first cable winch 32 (see Fig. 11) and the nuts of the long stay bolts and nuts 30 can be removed (see Fig. 12). The wind turbine blade is now carried by the first cable 40 only.

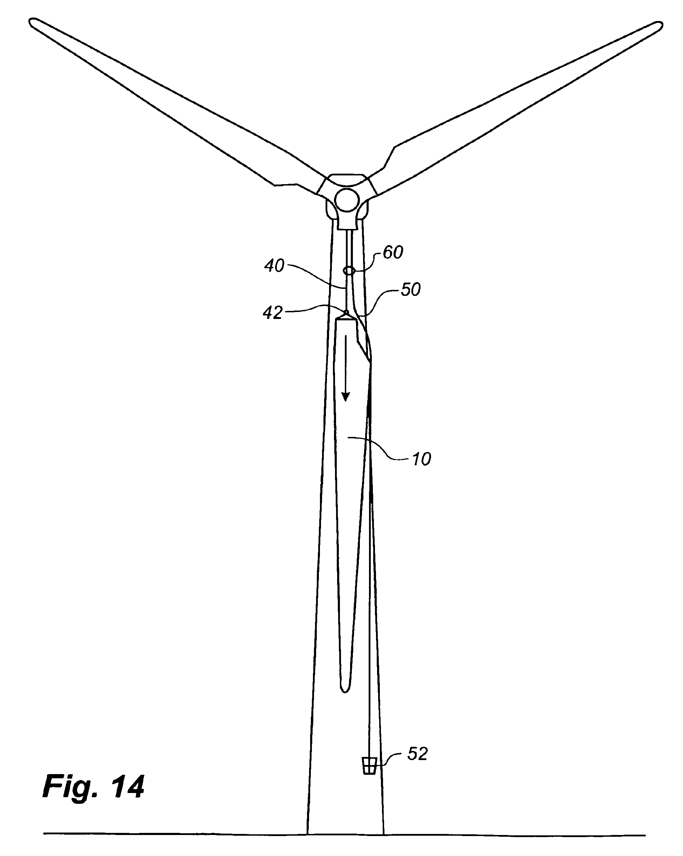

As shown in Fig. 14, the wind turbine blade 10 is now lowered by use of the first cable 40 and the first cable winch 32. A second attachment means 52 for instance in form of a basket sling is attached to the second cable 50 and is lowered to the ground. An intermediate cable guiding means 60, e.g. in form of a wire deflection roller, is arranged on both the first cable 40 and the second cable 50 between the first attachment means 42 and the first wire winch 32, and between the second attachment means 52 and the second wire winch 34, respectively.

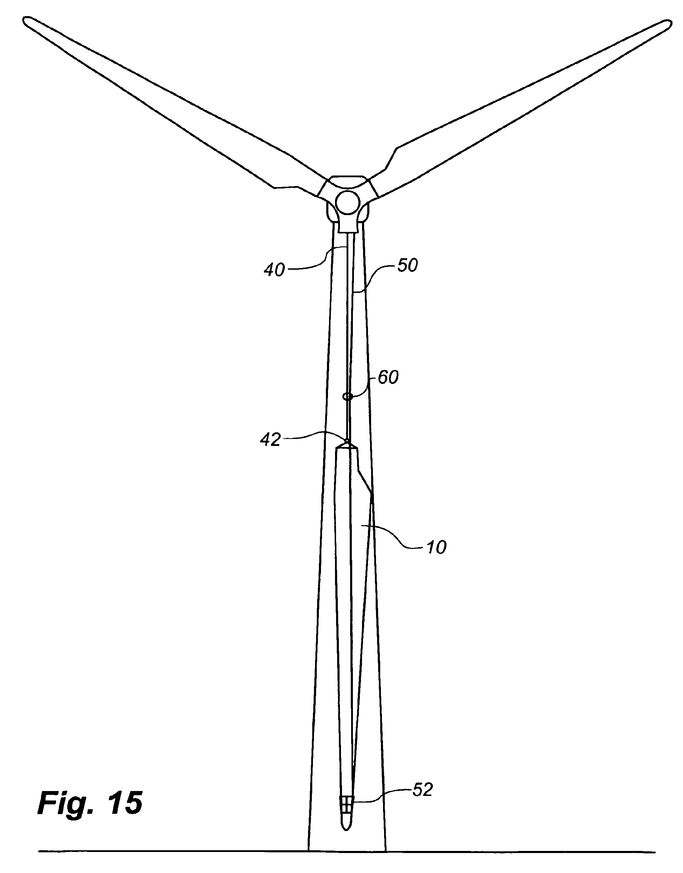

As shown in Fig. 15, the wind turbine blade 10 is lowered to a position, where workers on the ground can attach the second attachment means 52 to the tip end of the blade. Alternatively, workers may crawl or rappel down the wind turbine blade 10 in order to attach the second attachment means 52 to the tip end of the blade 10.

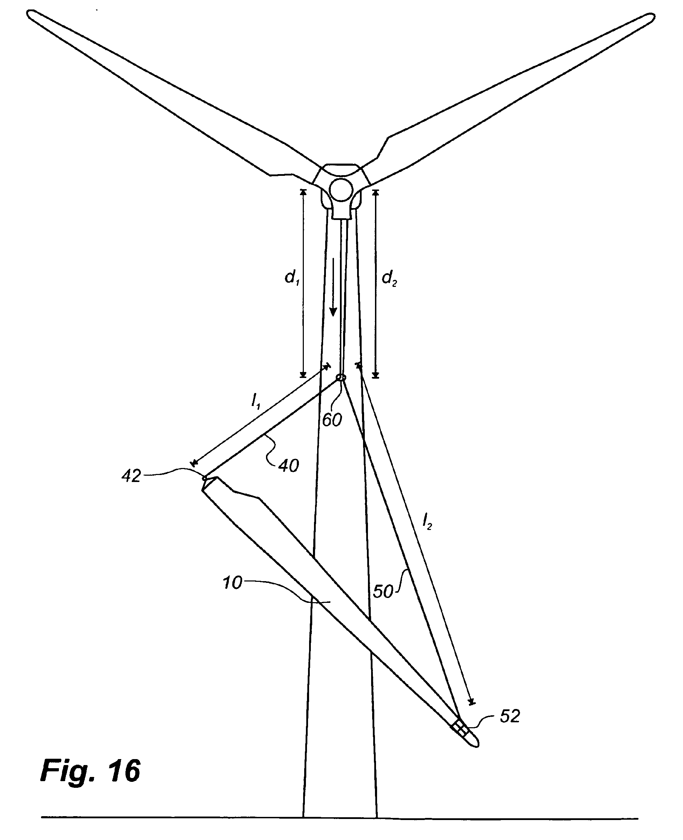

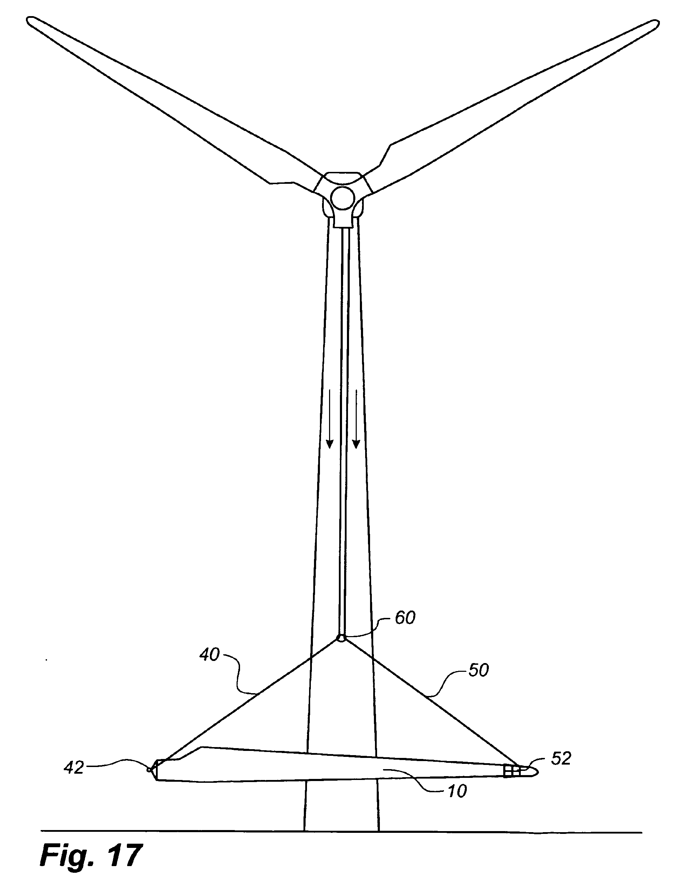

The blade is now raised by simultaneously using the first cable winch 32 and the second cable winch 34. Then, as shown in Fig. 16, the wind turbine blade is moved by lowering the first cable 40 by use of the first cable winch 32. Due to the use of the intermediate cable guiding means 60, the wind turbine blade 10 can be moved from a vertical orientation as shown in Fig. 15 to a horizontal position as shown in Fig. 17 in a controlled manner. In this process, a first distance *l₁* defined as the distance (or the cable part extending) between the intermediate cable guiding means 60 and the first attachment means 52 and a second distance *l₂* defined as the distance (or the cable part extending) between the intermediate cable guiding means 60 and the second attachment means 52 are varied. In practice this can be carried out by varying a total cable length *l₁*+ *d₁* of the first cable 40 between the first cable winch 32 and the first attachment means 42, and/or by varying the total cable length *l₂*+ *d₂* of the second cable 50 between the second cable winch 34 and the second attachment means 52. This operation can be carried out by use of the first cable winch 32 and the second cable winch 34 only.

The intermediate cable guiding means 60 may advantageously be provided with means for releasable attaching to the first cable 40 and/or the second cable 50. Thereby, the first distance *l₁* or the second distance *l₂* can be kept fixed when moving the wind turbine blade 10 between the vertical position and the horizontal position of the wind turbine blade. If the intermediate cable guiding means 60 can be rigidly fixed to both the first cable 40 and the second cable 50 then it is ensured that the blade stays in the given orientation, when raising/lowering the blade 10.

Once the wind turbine blade is oriented in a horizontal position as shown in Fig. 17 the wind turbine blade can be lowered on to the ground, a trailer or for an off-shore wind turbine to a pram by simultaneously lowering the first cable 40 and the second cable 50 by use of the first cable winch 32 and the second cable winch 34, respectively.

From the previous description it is recognised that it is the use of the intermediate cable guiding device 60, which makes it possible to move the wind turbine blade 10 between a vertical position and a horizontal position without using portable cranes or means attached to the ground.

In the following additional embodiments using an intermediate cable guiding device according to the invention is described.

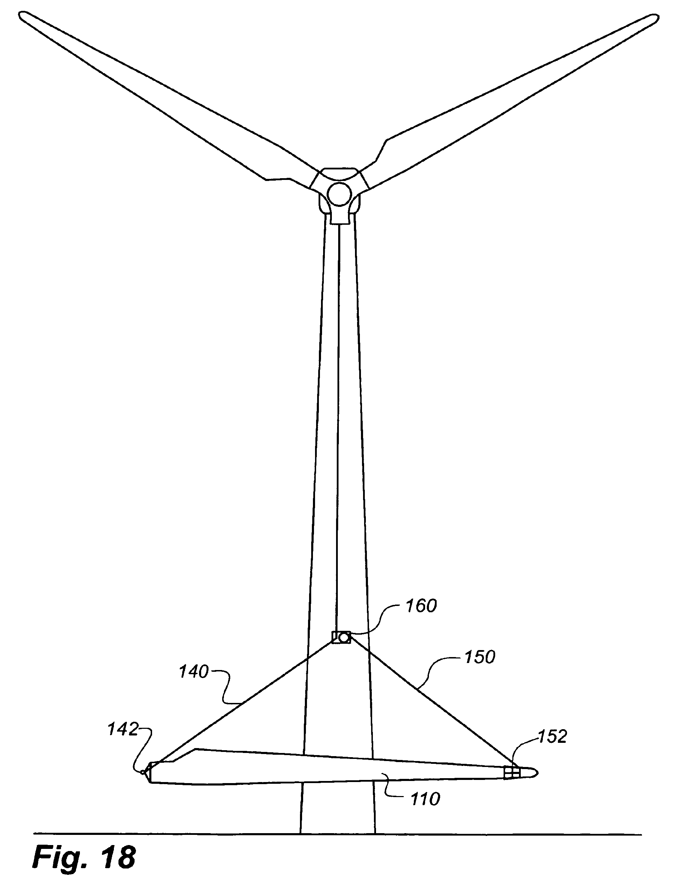

Fig. 18 shows a second embodiment according to the invention, wherein like numerals refer to like parts of the embodiment shown in Figs. 14-17. In this embodiment, the second cable winch is installed on the intermediate cable guiding means 160. The second cable winch may advantageously be a pass through cable winch in which case the second cable 150 may also be attached to loading means at or in the hub of the wind turbine.

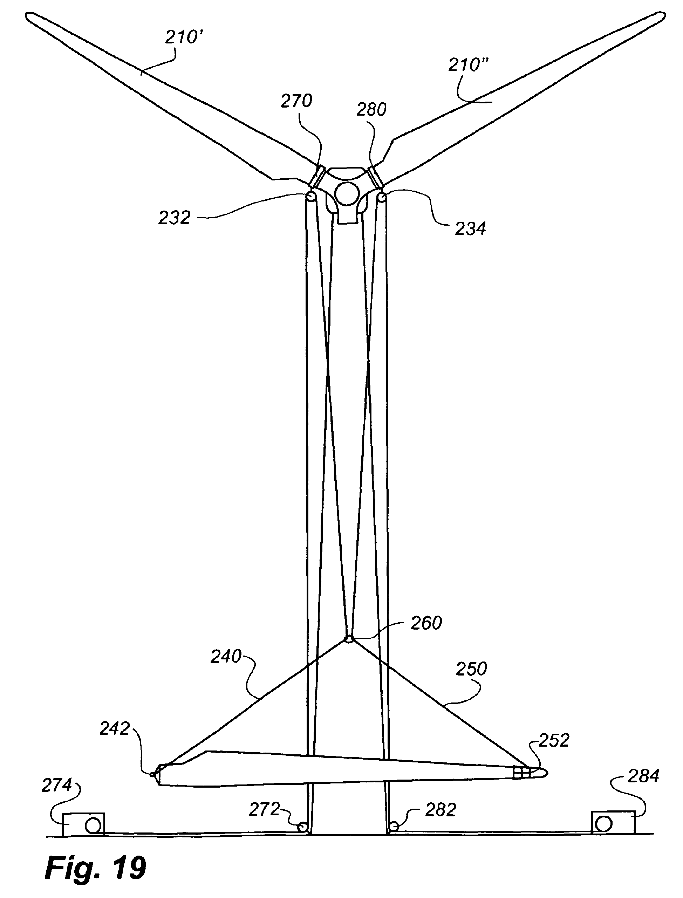

Fig. 19 shows a third embodiment according to the invention, wherein like numerals refer to like parts of the embodiment shown in Figs. 14-17. In this embodiment a first upper support means 270 in form of for instance a strap or a collar is attached to one of the other wind turbine blades 210', and a second upper support means 280 in form of for instance a strap or a collar is attached to another one of the other wind turbine blades 210". A first upper loading means 232 in form of a pulley or a deflection roller is attached to the first upper support means 270, and a second upper loading means 234 in form of a pulley or a deflection roller is attached to the second upper support means 280. In this embodiment, a first cable winch 274 and a second cable winch 284 are arranged on the ground (or on a pram for an off-shore wind turbine). A first lower pulley 272 or deflection roller, and a second lower pulley 282 or deflection roller are attached to a foundation of the wind turbine. The first cable 240 is attached to the first cable winch 274 via the first attachment means 242, the intermediate cable guiding means 260, the first upper pulley 232, and the first lower pulley 272. The total cable length of the first cable 240 can thus be varied by use of the first cable winch 274. The second cable 250 is attached to the second cable winch 284 via the second attachment means 252, the intermediate cable guiding means 260, the second upper pulley 234, and the second lower pulley 282. The total cable length of the second cable 250 can thus be varied by use of the first cable winch 284.

The embodiment has been depicted as using the first upper support means 270 and the second upper support means 280 only. However, according to an advantageous embodiment, a first additional support means and a second additional support means for instance in form of pulleys or deflection rollers are arranged within the hub in order to better guide wind turbine blade into or out of the blade adapter of the hub. According to yet another advantageous embodiment an additional cable is used for guiding the blade into or out of the blade adapter of the hub.

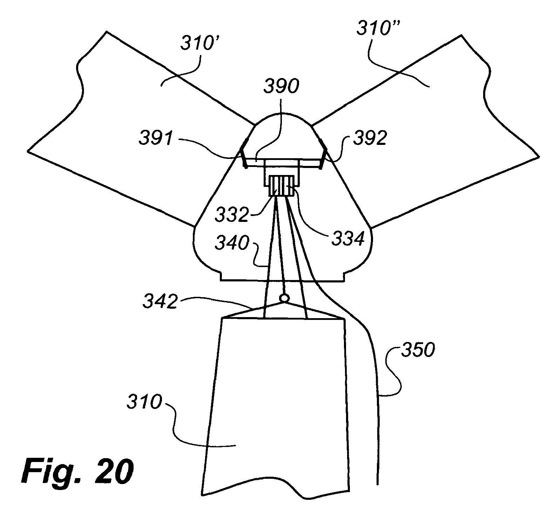

Fig. 20 shows a fourth embodiment according to the invention, wherein like numerals refer to like parts of the embodiment shown in Figs. 14-17. In this embodiment a support jig 390 is connected between a root flange of a first additional wind turbine blade 310' via a first attachment bracket 391 and a root flange of a second additional wind turbine blade 310" via a second attachment bracket 392. A two-sheave pulley is connected to the support jig 390, and the first cable 340 is attached to the first attachment means 342 via a first sheave 332, and the second cable 350 is attached to the second attachment means via a second sheave 334, the first sheave and second sheave thus being part of first upper loading means and second upper loading means, respectively. In an advantageous embodiment, the first cable 340 and the second cable 350 are further attached to additional pulleys connected to a second support jig mounted externally on a spinner of the hub. This embodiment also makes it possible to arrange the first cable winch and the second cable winch on the ground corresponding to the embodiment shown in Fig. 19.

The invention has been described with reference to a preferred embodiment. However, the scope of the invention is not limited to the illustrated embodiment, and alterations and modifications can be carried out without deviating from the scope of the invention.

### List of reference numerals

- 2: wind turbine
- 4: Tower
- 6: Nacelle
- 8: Hub
- 10, 110, 210, 210', 210",: Wind turbine blade
- 310,310',310" 14: blade tip
- 16: blade root
- 20: Hub flange / hub adapter
- 22: First nuts and bolts
- 24: Second nuts and bolts
- 26: Remainder of nuts and bolts
- 28: Hub adapter jig
- 30: Long stay bolts and nuts
- 32: First cable winch
- 34: Second cable winch
- 35: Root flange
- 36: Attachment plate
- 38: Attachment hole
- 40, 140, 240, 340: First cable
- 42, 142, 242, 342: Support chain
- 50, 150, 250, 350: Second cable
- 52, 152, 252, 352: Second attachment means
- 60, 160, 260: Intermediate cable guiding means
- 232: First upper pulley
- 234: Second upper pulley
- 270: First upper support means
- 272: First lower pulley
- 274: First cable winch
- 280: Second upper support means
- 282: Second lower pulley
- 284: Second cable winch
- 332: First sheave
- 334: Second sheave
- 390: Support jig
- 391: First attachment bracket
- 392: Second attachment bracket

## Claims

1. A method of craneless mounting or demounting of a wind turbine blade of a wind turbine, the wind turbine including a tower on top of which a machine housing is arranged, the machine housing comprising a hub from which a number of wind turbine blades extend substantially radially, and wherein the wind turbine blade comprises a root end and a tip end,
**characterised in that**
the method comprising the steps of:
a) attaching a first cable (40, 140, 240, 340) via a first attachment means (42, 142, 242, 342) to the wind turbine blade (10, 110, 210, 310) at a first longitudinal position of the blade,
b) attaching the first cable to a first upper loading means (232) arranged at the machine housing,
c) arranging an intermediate cable guiding means (60) between the first attachment means and the first upper loading means at a first distance (l*1*) from the first attachment means,
d) attaching a second cable (50, 150, 250, 350) via a second attachment means (52, 152, 252, 352) to the wind turbine blade at a second longitudinal position of the blade, and
e) attaching the second cable to the intermediate cable guiding means at a second distance (I2) from the second attachment means,
wherein the method further comprises the step of moving the blade between a horizontal position and a vertical position by:
f) varying a length of the first cable and/or varying a length of the second cable so that the first distance (*l₁*) and/or the second distance (*l₂*) are varied.

2. A method according to claim 1, wherein the second cable further is attached to a second upper loading means arranged at the machine housing, and wherein the intermediate cable guiding means is arranged between the second attachment means and the second upper loading means at said second distance from the second attachment means.

3. A method according to claim 1 or 2, wherein, in the horizontal position of the wind turbine blade, the first attachment means are positioned in a first horizontal position and the second attachment means are positioned in a second horizontal position, and wherein the intermediate cable guiding means is arranged in an intermediate horizontal position between the first horizontal position and the second horizontal position.

4. A method according to claim 3, wherein, in both the horizontal position and the vertical position of the wind turbine blade, a part of the first cable between the intermediate cable guiding means and the first upper loading means is oriented substantially vertical.

5. A method according to claims 2 and 4, wherein in both the horizontal and vertical positions of the wind turbine blade, a part of the second cable between the intermediate cable guiding means and the second upper loading means is oriented substantially vertical.

6. A method according to any of the previous claims, wherein step f) is carried out by keeping either the first distance or the second distance fixed and varying the other of the first distance and the second distance.

7. An apparatus for mounting or demounting a wind turbine blade (10, 110, 210, 310) of a wind turbine (2) including a tower (4) on top of which a machine housing is arranged, the machine housing comprising a hub (8) from which a number of wind turbine blades extend substantially radially, and wherein the wind turbine blade comprises a root end and a tip end, the apparatus comprising:
- a first cable (40, 140, 240, 340) provided with first attachment means (42, 142, 242, 342) for attaching to the wind turbine blade (10, 110, 210, 310) at a first longitudinal position,
- a second cable (50, 150, 250, 350) provided with second attachment means (52, 152, 252, 352) for attaching to the wind turbine blade at a second longitudinal position,
- first upper loading means (32, 232, 332) arranged at the machine housing and being attached to the first cable (40, 140, 240, 340),
- first drive means (32, 274) for varying a length of the first cable (40, 140, 240, 340), and
- second drive means (34, 284) for varying a length of the second cable (50, 150, 250, 350), **characterised in that** the apparatus further comprises:
- an intermediate cable guiding means (60, 160, 260, 360) connected to the first cable (40, 140, 240, 340) between the first upper loading means (32, 232, 332) and the first attachment means (42, 142, 242, 342) at a first distance from the first attachment means (42, 142, 242, 342), and further being connected to the second cable (50, 150, 250, 350) at a second distance from the second attachment means (52, 152, 252, 352).

8. An apparatus according to claim 7, wherein the apparatus further comprises second upper loading means (34, 234, 334) arranged at the machine housing and being attached to the second cable.

9. An apparatus according to claim 7 or 8, wherein the intermediate cable guiding means is provided with fixation means for rigidly attaching the intermediate cable guiding means to the first cable and/or second cable.

10. An apparatus according to any of claims 7-9, wherein the first drive means and the second drive means comprise a first cable winch (32, 274) and a second cable winch (34, 284), respectively.

11. An apparatus according to claim 10, wherein the second cable winch is arranged on the intermediate cable guiding means (160).

12. An apparatus according to claim 10, wherein the first cable winch and the first upper loading means are an integrated unit (32), and/or the second cable winch and the second upper loading means are an integrated unit (34).

13. An apparatus according to any of claims 8-11, wherein the first upper loading means and/or the second upper loading means are cable guiding means (232, 332; 234, 334), such as a pulley or a deflection roller.

14. An apparatus according to claim 13, wherein the first drive means (274) and/or the second drive means (284) are arranged at a horizontal level in vicinity of a foundation of the tower.

15. A wind turbine installation including a tower on top of which a machine housing is arranged, the machine housing comprising a hub from which a number of wind turbine blades extend substantially radially, and wherein the wind turbine further comprises a mounting/demounting apparatus according to any of claims 7-14.

16. A wind turbine installation according to claim 15, wherein a reinforcement bar or a jig (28, 390) is mounted at the hub to support the first upper loading means and/or the second upper loading means.

17. A wind turbine installation according to claim 15, wherein the first upper loading means (232) and/or the second upper loading means (234) are supported by support means (270; 280) attached to other wind turbine blades of the wind turbine.

## Patentansprüche

1. Verfahren zum kranlosen Montieren oder Demontieren eines Windturbinen-Rotorblatts einer Windturbine, wobei die Windturbine einen Turm aufweist, an dessen Oberseite ein Maschinengehäuse angeordnet ist, wobei das Maschinengehäuse eine Nabe aufweist, von der sich eine Anzahl von Windturbinen-Rotorblättern im Wesentlichen radial erstrecken, und wobei das Windturbinen-Rotorblatt ein Wurzelende und ein äußeres Ende aufweist, **dadurch gekennzeichnet,**
**dass** das Verfahren folgende Schritte aufweist:
(a) Anbringen eines ersten Seils (40, 140, 240, 340) mittels einer ersten Befestigungseinrichtung (42, 142, 242, 342) an dem Windturbinen-Rotorblatt (10, 110, 210, 310) in einer ersten Position in Längsrichtung des Rotorblatts,
(b) Anbringen des ersten Seils an einer ersten oberen Ladeeinrichtung (232), die an dem Maschinengehäuse angebracht ist,
(c) Anordnen einer dazwischenliegenden Seilführungseinrichtung (60) zwischen der ersten Befestigungseinrichtung und der ersten oberen Ladeeinrichtung in einem ersten Abstand (11) von der ersten Befestigungseinrichtung,
(d) Anbringen eines zweiten Seils (50, 150, 250, 350) mittels einer zweiten Befestigungseinrichtung (52, 152, 252, 352) an dem Windturbinen-Rotorblatt in einer zweiten Position in Längsrichtung des Rotorblatts, und
(e) Anbringen des zweiten Seils an der dazwischenliegenden Seilführungseinrichtung in einem zweiten Abstand (12) von der zweiten Befestigungseinrichtung,
wobei das Verfahren ferner den Schritt aufweist, das Rotorblatt zwischen einer horizontalen Stellung und einer vertikalen Stellung zu bewegen, und zwar durch (f) Variieren der Länge des ersten Seils und/oder Variieren der Länge des zweiten Seils, sodass der erste Abstand (11) und/oder der zweite Abstand (12) variiert werden.

2. Verfahren nach Anspruch 1,
wobei das zweite Seil ferner an einer zweiten oberen Ladeeinrichtung angebracht ist, die an dem Maschinengehäuse angeordnet wird, und
wobei die dazwischenliegende Seilführungseinrichtung zwischen der zweiten Befestigungseinrichtung und der zweiten oberen Ladeeinrichtung in dem zweiten Abstand von der zweiten Befestigungseinrichtung angeordnet wird.

3. Verfahren nach Anspruch 1 oder 2,
wobei in der horizontalen Stellung des Windturbinen-Rotorblatts die erste Befestigungseinrichtung in einer ersten horizontalen Stellung positioniert wird und die zweite Befestigungseinrichtung in einer zweiten horizontalen Stellung positioniert wird
und wobei die dazwischenliegende Seilführungseinrichtung in einer dazwischenliegenden horizontalen Stellung zwischen der ersten horizontalen Stellung und der zweiten horizontalen Stellung angeordnet wird.

4. Verfahren nach Anspruch 3,
wobei sowohl in der horizontalen Stellung als auch in der vertikalen Stellung des Windturbinen-Rotorblatts ein Teil des ersten Seils zwischen der dazwischenliegenden Seilführungseinrichtung und der ersten oberen Ladeeinrichtung im wesentlichen vertikal orientiert wird.

5. Verfahren nach Anspruch 2 und 4,
wobei sowohl in der horizontalen Stellung als auch in der vertikalen Stellung des Windturbinen-Rotorblatts ein Teil des zweiten Kabels zwischen der dazwischenliegenden Seilführungseinrichtung und der zweiten oberen Ladeeinrichtung im wesentlichen vertikal orientiert wird.

6. Verfahren nach einem der vorhergehenden Ansprüche,
wobei der Schritt (f) durchgeführt wird, indem entweder der erste Abstand oder der zweite Abstand fest gehalten wird und der andere von dem ersten Abstand und dem zweiten Abstand variiert wird.

7. Vorrichtung zum Montieren oder Demontieren eines Windturbinen-Rotorblatts (10, 110, 210, 310) einer Windturbine (2), die einen Turm (4) aufweist, an dessen Oberseite ein Maschinengehäuse angeordnet ist, wobei das Maschinengehäuse eine Nabe (8) aufweist, von der sich eine Anzahl von Windturbinen-Rotorblättern im wesentlichen radial erstreckt, und wobei das Windturbinen-Rotorblatt ein Wurzelende und ein äußeres Ende besitzt, wobei die Vorrichtung folgendes aufweist:
- ein erstes Seil (40, 140, 240, 340), das mit einer ersten Befestigungseinrichtung (42, 142, 242, 342) versehen ist, um es an dem Windturbinen-Rotorblatt (10, 110, 210, 310) in einer ersten Position in Längsrichtung anzubringen,
- ein zweites Seil (50, 150, 250, 350), das mit einer zweiten Befestigungseinrichtung (52, 152, 252, 352) versehen ist, um es an dem Windturbinen-Rotorblatt in einer zweiten Position in Längsrichtung anzubringen,
- eine erste obere Ladeeinrichtung (32, 232, 323), die an dem Maschinengehäuse angeordnet und an dem ersten Seil (40, 140, 240, 340) angebracht ist,
- eine erste Antriebseinrichtung (32, 274), um die Länge des ersten Seils (40, 140, 240, 340) zu variieren,
- eine zweite Antriebseinrichtung (34, 284), um die Länge des zweiten Seils (50, 150, 250, 350) zu variieren,
**dadurch gekennzeichnet,**
**dass** die Vorrichtung ferner folgendes aufweist:
eine dazwischenliegende Seilführungseinrichtung (60, 160, 260, 360), die mit dem ersten Seil (40, 140, 240, 340) zwischen der ersten oberen Ladeeinrichtung (32, 232, 323) und der ersten Befestigungseinrichtung (42, 142, 242, 342) in einem ersten Abstand von der ersten Befestigungseinrichtung (42, 142, 242, 342) verbunden ist und die ferner mit dem zweiten Seil (50, 150, 250, 350) in einem zweiten Abstand von der zweiten Befestigungseinrichtung (52, 152, 252, 352) verbunden ist.

8. Vorrichtung nach Anspruch 7,
wobei die Vorrichtung ferner eine zweite obere Ladeeinrichtung (34, 234, 334) aufweist, die an dem Maschinengehäuse angeordnet und an dem zweiten Seil angebracht ist.

9. Vorrichtung nach Anspruch 7 oder 8,
wobei die dazwischenliegende Seilführungseinrichtung mit einer Befestigungseinrichtung versehen ist, um die dazwischenliegende Seilführungseinrichtung stabil an dem ersten Seil und/oder dem zweiten Seil anzubringen.

10. Vorrichtung nach einem der Ansprüche 7 bis 9,
wobei die erste Antriebseinrichtung und die zweite Antriebseinrichtung eine erste Seilwinde (32, 274) beziehungsweise eine zweite Seilwinde (34, 284) aufweisen.

11. Vorrichtung nach Anspruch 10,
wobei die zweite Seilwinde an der dazwischenliegenden Seilführungseinrichtung (160) angeordnet ist.

12. Vorrichtung nach Anspruch 10,
wobei die erste Seilwinde und die erste obere Ladeeinrichtung eine integrierte Einheit (32) bilden und/oder die zweite Seilwinde und die zweite obere Ladeeinrichtung eine integrierte Einheit (34) bilden.

13. Vorrichtung nach einem der Ansprüche 8 bis 11,
wobei die erste obere Ladeeinrichtung und/oder die zweite obere Ladeeinrichtung Seilführungseinrichtungen (232, 332; 234, 334) sind, wie zum Beispiel eine Seilscheibe oder eine Umlenkrolle.

14. Vorrichtung nach Anspruch 13,
wobei die erste Antriebseinrichtung (274) und/oder die zweite Antriebseinrichtung (284) auf einem horizontalen Niveau in der Nähe des Fundaments des Turms angeordnet sind.

15. Windturbinenanlage, die einen Turm aufweist, an dessen Oberseite ein Maschinengehäuse angeordnet ist, wobei das Maschinengehäuse eine Nabe aufweist, von der sich eine Anzahl von Windturbinen-Rotorblättern im wesentlichen in radialer Richtung erstrecken, und wobei die Windturbine ferner eine Montage/Demontage-Vorrichtung nach einem der Ansprüche 7 bis 14 aufweist.

16. Windturbinenanlage nach Anspruch 15,
wobei eine Verstärkungsstange oder eine Spannvorrichtung (28, 390) an der Nabe angebracht ist, um die erste obere Ladeeinrichtung und/oder die zweite obere Ladeeinrichtung zu tragen.

17. Windturbinenanlage nach Anspruch 15,
wobei die erste obere Ladeeinrichtung (232) und/oder die zweite obere Ladeeinrichtung (234) von einer Trageinrichtung (270; 280) abgestützt sind, die an anderen Windturbinen-Rotorblättern der Windturbine angebracht ist.

## Revendications

1. Procédé de montage ou de démontage sans grue d'une aube de turbine éolienne d'une turbine éolienne, la turbine éolienne comprenant une tour sur laquelle un carter de machine est arrangé, le carter de machine comportant un moyeu en provenance duquel un certain nombre d'aubes de turbine éolienne s'étendent sensiblement dans le sens radial, et dans lequel l'aube de turbine éolienne comporte un extrémité emplanture et une extrémité bout,
**caractérisé en ce que**
le procédé comporte les étapes consistant à :
a) fixer un premier câble (40, 140, 240, 340) par le biais d'un premier moyen de fixation (42, 142, 242, 342) sur l'aube de turbine éolienne (10, 110, 210, 310) au niveau d'une première position longitudinale de l'aube,
b) fixer le premier câble sur un premier moyen de chargement supérieur (232) arrangé au niveau du carter de machine,
c) arranger un moyen de guidage de câble intermédiaire (60) entre le premier moyen de fixation et le premier moyen de chargement supérieur à une première distance (11) par rapport au premier moyen de fixation,
d) fixer un second câble (50, 150, 250, 350) par le biais d'un second moyen de fixation (52, 152, 252, 352) sur l'aube de turbine éolienne au niveau d'une seconde position longitudinale de l'aube, et
e) fixer le second câble sur le moyen de guidage de câble intermédiaire au niveau d'une seconde distance (12) par rapport au second moyen de fixation,
dans lequel le procédé comporte par ailleurs l'étape consistant à déplacer l'aube entre une position horizontale et une position verticale par l'étape consistant à :
f) faire varier une longueur du premier câble et/ou faire varier une longueur du second câble de sorte que la première distance (*l₁*) et/ou la seconde distance (*l₂*) sont variées.

2. Procédé selon la revendication 1, dans lequel le second câble est par ailleurs fixé sur un second moyen de chargement supérieur arrangé au niveau du carter de machine, et dans lequel le moyen de guidage de câble intermédiaire est arrangé entre le second moyen de fixation et le second moyen de chargement supérieur au niveau de ladite seconde distance par rapport au second moyen de fixation.

3. Procédé selon la revendication 1 ou la revendication 2, dans lequel, dans la position horizontale de l'aube de turbine éolienne, les premiers moyens de fixation sont positionnés dans une première position horizontale et les seconds moyens de fixation sont positionnés dans une seconde position horizontale, et dans lequel le moyen de guidage de câble intermédiaire est arrangé dans une position horizontale intermédiaire entre la première position horizontale et la seconde position horizontale.

4. Procédé selon la revendication 3, dans lequel, dans à la fois la position horizontale et la position verticale de l'aube de turbine éolienne, une partie du premier câble entre le moyen de guidage de câble intermédiaire et le premier moyen de chargement supérieur est orientée sensiblement à la verticale.

5. Procédé selon la revendication 2 et la revendication 4, dans lequel, dans à la fois les positions horizontale et verticale de l'aube de turbine éolienne, une partie du second câble entre le moyen de guidage de câble intermédiaire et le second moyen de chargement supérieur est orientée sensiblement à la verticale.

6. Procédé selon l'une quelconque des revendications précédentes, dans lequel l'étape f) est effectuée en maintenant l'une ou l'autre de la première distance ou de la seconde distance fixe et en variant l'autre de la première distance et de la seconde distance.

7. Appareil de montage ou de démontage d'une aube de turbine éolienne (10, 110, 210, 310) d'une turbine éolienne (2) comprenant une tour (4) sur laquelle un carter de machine est arrangé, le carter de machine comportant un moyeu (8) en provenance duquel un certain nombre d'aubes de turbine éolienne s'étendent sensiblement dans le sens radial, et dans lequel l'aube de turbine éolienne comporte un extrémité emplanture et une extrémité bout, l'appareil comportant :
- un premier câble (40, 140, 240, 340) comportant des premiers moyens de fixation (42, 142, 242, 342) à des fins de fixation sur l'aube de turbine éolienne (10, 110, 210, 310) au niveau d'une première position longitudinale,
- un second câble (50, 150, 250, 350) comportant des seconds moyens de fixation (52, 152, 252, 352) à des fins de fixation sur l'aube de turbine éolienne au niveau d'une seconde position longitudinale,
- des premiers moyens de chargement supérieurs (32, 232, 332) arrangés au niveau du carter de machine et étant attachés sur le premier câble (40, 140, 240, 340),
- des premiers moyens d'entraînement (32, 274) destinés à varier une longueur du premier câble (40, 140, 240, 340), et
- des seconds moyens d'entraînement (34, 284) destinés à varier une longueur du second câble (50, 150, 250, 350), **caractérisé en ce que** l'appareil comporte par ailleurs :
- un moyen de guidage de câble intermédiaire (60, 160, 260, 360) raccordé au niveau du premier câble (40, 140, 240, 340) entre les premiers moyens de chargement supérieurs (32, 232, 332) et les premiers moyens de fixation (42, 142, 242, 342) à une première distance par rapport aux premiers moyens de fixation (42, 142, 242, 342), et étant par ailleurs raccordé au second câble (50, 150, 250, 350) à une seconde distance par rapport aux seconds moyens de fixation (52, 152, 252, 352).

8. Appareil selon la revendication 7, dans lequel l'appareil comporte par ailleurs des seconds moyens de chargement supérieurs (34, 234, 334) arrangés au niveau du carter de machine et étant attachés au second câble.

9. Appareil selon la revendication 7 ou la revendication 8, dans lequel le moyen de guidage de câble intermédiaire comporte des moyens de fixation permettant de fixer de manière rigide le moyen de guidage de câble intermédiaire au niveau du premier câble et/ou du second câble.

10. Appareil selon l'une quelconque des revendications 7 à 9, dans lequel les premiers moyens d'entraînement et les seconds moyens d'entraînement comportent un premier treuil à câble (32, 274) et un second treuil à câble (34, 284), respectivement.

11. Appareil selon la revendication 10, dans lequel le second treuil à câble est arrangé sur le moyen de guidage de câble intermédiaire (160).

12. Appareil selon la revendication 10, dans lequel le premier treuil à câble et les premiers moyens de chargement supérieurs sont une unité intégrée (32), et/ou le second treuil à câble et les seconds moyens de chargement supérieurs sont une unité intégrée (34).

13. Appareil selon l'une quelconque des revendications 8 à 11, dans lequel les premiers moyens de chargement supérieurs et/ou les seconds moyens de chargement supérieurs sont des moyens de guidage de câble (232, 332 ; 234, 334), tels une poulie ou un rouleau de renvoi.

14. Appareil selon la revendication 13, dans lequel les premiers moyens d'entraînement (274) et/ou les seconds moyens d'entraînement (284) sont arrangés à un niveau horizontal à proximité de fondations de la tour.

15. Installation de turbine éolienne comprenant une tour sur laquelle un carter de machine est arrangé, le carter de machine comportant un moyeu en provenance duquel un certain nombre d'aubes de turbine éolienne s'étendent sensiblement dans le sens radial, et dans laquelle la turbine éolienne comporte par ailleurs un appareil de montage/de démontage selon l'une quelconque des revendications 7 à 14.

16. Installation de turbine éolienne selon la revendication 15, dans laquelle une barre d'armature, ou un gabarit, (28, 390) est montée au niveau du moyeu à des fins de support des premiers moyens de chargement supérieurs et/ou des seconds moyens de chargement supérieurs.

17. Installation de turbine éolienne selon la revendication 15, dans laquelle les premiers moyens de chargement supérieurs (232) et/ou les seconds moyens de chargement supérieurs (234) sont supportés par un moyen de support (270 ; 280) attaché aux autres aubes de turbine éolienne de la turbine éolienne.
